# EUROPÄISCHE PATENTSCHRIFT

(11) **EP 4 514 496 B1**
(45) Veröffentlichungstag und Bekanntmachung des Hinweises auf die Patenterteilung: **08.10.2025**
(21) Anmeldenummer: 23719798.3
(22) Anmeldetag: 26.04.2023
(51) Int. Cl.: B01D 24/04, B01J 20/28, C02F 1/28

(54) **FILTER ZUM ENTFERNEN VON MIKRO- ODER NANOSKALIGEN KUNSTSTOFFPARTIKELN AUS WASSER SOWIE WASSERAUFBEREITUNGSVORRICHTUNG**
FILTER FOR REMOVING MICRO- OR NANOSCALE PLASTIC PARTICLES FROM WATER AND WATER TREATMENT DEVICE
FILTRE POUR L'ÉLIMINATION DE MICRO OU NANOPARTICULES DE PLASTIQUE DE L'EAU ET DISPOSITIF DE TRAITEMENT DE L'EAU

(30) Priorität: 29.04.2022 LU 501978
(43) Veröffentlichungstag der Anmeldung: 05.03.2025
(73) Patentinhaber: Klar20 GmbH, 76646 Bruchsal (DE)
(72) Erfinder: AHMAD, Fähzan, 76646 Bruchsal (DE)
(74) Vertreter: Zeiner, Johannes Michael
(86) Internationale Anmeldenummer: PCT/EP2023/060968
(87) Internationale Veröffentlichungsnummer: WO 2023/209013

(56) Entgegenhaltungen:
- CN-A- 108 926 880
- DE-A1- 102020 132 439
- US-A1- 2006 260 997
- US-B1- 6 361 701

## Beschreibung

Die Erfindung betrifft einen Filter zum Entfernen von mikro- oder nanoskaligen Kunststoffpartikeln aus Wasser, der ein von dem Wasser durchströmbares Filtermedium aufweist, wobei das Filtermedium Kugeln umfasst, wobei die Kugeln eine Schicht aufweisen, die zur Aufnahme der Kunststoffpartikel eingerichtet ist, und wobei die Kugeln in einer bidispersen Kugelpackung angeordnet sind. Ferner betrifft die Erfindung eine Vorrichtung zur Wasseraufbereitung, insbesondere zum Entfernen von mikro- oder nanoskaligen Kunststoffpartikeln aus Wasser.

Nanoskalige Kunststoffpartikel weisen eine Partikelgröße zwischen 1 nm und 100 nm auf, während mikroskalige Kunststoffpartikel eine Partikelgröße zwischen > 100 nm und < 35 µm aufweisen können. Solche nano- oder mikroskaligen Kunststoffpartikel, die insbesondere Polyethylen (PE), Polypropylen (PP) oder Polyethylenterephthalat (PET) umfassen, können über Trinkwasser von Lebewesen aufgenommen werden und sich in deren Körper, insbesondere den inneren Organen sowie im Blut und Gehirn, anreichern und zu schweren gesundheitlichen Schäden führen. Beispielsweise können Entzündungen der Gefäßwand der Aorta eines Menschen (s. z.B. https://journals.plos.org/plosone/article?id=10.1371/journal.pone.0260181, zuletzt aufgerufen am 19.04.2023) oder eine Dehnung und ein Aufreißen einer Zellmembran verursacht werden (s. z. B. https://www.pnas.org/doi/10.1073/pnas.2104610118, zuletzt aufgerufen am 19.04.2023).

Durch Benutzung sind Wasserfilter zur Trinkwasseraufbereitung bekannt, die insbesondere Kalk und Ionen aus Leitungswasser entfernen. Außerdem sind Aktivkohlefilter zur Reinigung von bakteriell belastetem Wasser bekannt.

Weitere Filter sind aus CN 108 926 880 A, US 2006/0260997 A1 und US 6,361,710 B1 bekannt.

Aus DE 10 2020 132 439 A1 ist ein Filter mit einem Filtermedium bekannt, dessen hydrophobe Schicht zur Adsorption von mikro- oder nanoskaligen Kunststoffpartikeln vorgesehen ist. Ferner ist aus dieser Druckschrift eine druckbeaufschlagte Wasseraufbereitungsvorrichtung bekannt. Nachteilig ist, dass bei nano- oder mikroskaligen Kunststoffpartikeln zum Erreichen einer zufriedenstellenden Filterleistung entweder hohe Drücke erforderlich sind oder eine lange Durchlaufzeit in Kauf genommen werden muss.

Der vorliegenden Erfindung liegt die Aufgabe zugrunde, einen Filter der eingangs genannten Art zu schaffen, der die Nachteile bisheriger Filter überkommt.

Erfindungsgemäß wird die Aufgabe dadurch gelöst, dass die Schicht aus einem hydrophoben oder hydrophilen Material ausgewählt aus der Gruppe bestehend aus Zellulose, Polyamid und Polyethylenglycol gebildet, oder die Schicht ist aus einem Material gebildet, das ein elektrisches Dipolmoment aufweist und ist aus der Gruppe bestehend aus Polytetrahydrofuran, Polymethylmethacrylat und einem Zeolithen ausgewählt, und/oder die Schicht umfasst ein Material, das ein konjugiertes π-System aufweist.

Der Erfinder hat erkannt, dass eine Trichlorsilan aufweisende, hydrophobe Schicht zwar zur Aufnahme von nano- oder mikroskaligen Kunststoffpartikeln geeignet ist, jedoch mit einer anderen der genannten Beschichtungen eine bessere Aufnahme der nano- oder mikroskaligen Kunststoffpartikel möglich ist. Es kann vorteilhaft ein Filter mit einer um 3 bis 10 % höheren Filterleistung geschaffen werden, wenn ein anderes Beschichtungsmaterial als ein Trichlorsilan aufweisendes verwendet wird.

Der Begriff Aufnahme bedeutet eine Sorption, das heißt eine Absorption oder eine Adsorption, insbesondere eine Adsorption, das heißt ein Anhaften an der eine Kugeloberfläche zumindest teilweise, vorzugsweise vollständig belegenden Schicht.

Eine Kugel im Sinne der vorliegenden Erfindung ist ein Körper, der im Rahmen von technischen Fertigungstoleranzen von einer perfekten Kugelform abweichen kann. Beispielsweise wäre ein Ellipsoid eine Kugel im Sinne dieser Erfindung, sofern dessen kleinster und größter Radius um nicht mehr als 4 % voneinander abweichen.

Ein bidisperse Kugelpackung ist eine solche Kugelpackung, bei der Kugeln einer ersten Größe mit Kugeln einer zweiten Größe miteinander vermischt sind. Eine Größe der Kugeln kann insbesondere durch deren Durchmesser bestimmt sein. Eine bidisperse Kugelpackung im Sinne der vorliegenden Erfindung weist unter Berücksichtigung von Fertigungstoleranzen ausschließlich Kugeln einer ersten Größe und Kugeln einer zweiten Größe auf.

Bei einer bidispersen Kugelpackung im Sinne der vorliegenden Erfindung sind im Gegensatz zu einer bimodalen Verteilung keine Kugeln vorhanden, deren Größe unter Berücksichtigung von Fertigungstoleranzen zwischen einer Größe der ersten und einer Größe der zweiten Kugeln liegt. Dies wäre nachteilig, da durch Kugeln mit einer solchen Zwischengröße Zwischenräume in dem Filter besetzt würden, die einen Durchfluss durch den Filter erheblich verringern würden. Ein möglicher Durchsatz, das heißt eine Durchflussleistung, würde stark absinken.

Ein Beispiel für eine bidisperse Kugelpackung ist beispielsweise eine Mischung von Kugeln mit einem Durchmesser von 3 mm mit solchen mit einem Durchmesser von 1 mm.

Der Vorteil einer bidispersen Kugelpackung ist eine besonders hohe erreichbare Packungsdichte, bei der Zwischenräume zwischen größeren Kugeln von kleineren Kugeln besetzt werden können und bei der gleichzeitig eine besonders große spezifische Oberfläche erreicht wird, auf der die aus dem aufzubereitendem Wasser zu entfernende Kunststoffpartikel anhaften können. Durch die bidisperse Kugelpackung kann vorteilhaft ein Filter mit einer optimalen Filtrationsleistung geschaffen werden.

Denkbar ist, dass Kugeln einer ersten Größe der bidispersen Kugelpackung zum Entfernen einer ersten Art von Kunststoffpartikeln aus Wasser eingerichtet ist, während Kugeln einer zweiten Größe der bidispersen Kugelpackung zum Entfernen einer zweiten Art von Kunststoffpartikeln vorgesehen ist. Dies ist insbesondere durch unterschiedlichen Beschichtungsmaterialien möglich. Beispielsweise können die Kugeln der ersten Größe zum Entfernen von Polypropylen (PP) eingerichtet sein und die Kugeln der zweiten Größe zum Entfernen von Polymethylmethacrylat (PMMA).

Denkbar ist außerdem, dass die Kugeln in einer mehrdispersen Kugelpackung angeordnet sind. Bei einer tridispersen Kugelpackung wären dafür Kugeln dreier verschiedener Größen erforderlich, und bei einer tetradispersen Kugelpackung Kugeln mit vier voneinander verschiedenen Größen.

Ferner liegt der Erfindung die Aufgabe zugrunde, eine Wasseraufbereitungsvorrichtung zu schaffen, die in einem Wasserleitungsnetz eines Gebäudes, beispielsweise an einem Wasserhahn in einer Küche eines Wohngebäudes, betreibbar ist. Übliche Wasserdrücke in Gebäuden liegen zwischen 2 und 6 bar und sind zum Entfernen von Kunststoffpartikeln ausreichend. Gleichzeitig soll eine Wasseraufbereitungsvorrichtung geschaffen werden, die in einem Wasserleitungsnetz eines Gebäudes mit den dort üblichen Volumenströmen zwischen 5 und 15 I/min betreibbar ist.

Diese Aufgabe wird durch eine erfindungsgemäße Wasseraufbereitungsvorrichtung gelöst.

Der Erfinder hat erkannt, dass durch geeignete Wahl von Kugelparametern von in einer bidispersen Kugelpackung angeordneten Kugeln, insbesondere deren Durchmesser oder deren Volumenanteil an dem Filtermedium, Filtereigenschaften maßgeschneidert werden können. Insbesondere sind eine besonders hohe Packungsdichte bei gleichzeitig hoher Durchflussrate durch den Filter möglich.

Weiter vorteilhaft kann sichergestellt werden, dass eine besonders hohe Filtrationsleistung erreicht wird, das heißt besonders viele Kunststoffpartikel entfernt werden. Dies wird insbesondere dadurch möglich, dass eine spezifische Oberfläche des Filtermediums, das heißt eine Oberfläche aller in der bidispersen Kugelpackung angeordneten, beschichteten Kugeln, besonders groß ist und zur Aufnahme von aus dem Wasser zu entfernenden Kunststoffpartikeln zur Verfügung steht.

Die Kugeln können Hohlkugeln oder Vollkugeln sein.

Zweckmäßigerweise beträgt die Packungsdichte der Kugeln zwischen 55 und 90 Vol-%, vorzugsweise zwischen 65 und 80 Vol-%, besonders bevorzugt zwischen 71 Vol-% und 76 Vol- %. Die Angabe Volumenprozent bezieht sich auf das gesamte Volumen des Filtermediums. Ein Anteil von 90 Vol-% bedeutet beispielsweise, dass 90 % des Filtermediumvolumens durch Kugeln besetzt sind und 10 Vol-% als Raum zum Durchströmen durch aufzubereitendes Wasser verfügbar ist.

Durch die genannten Volumenanteile ist ein besonders hoher Durchfluss durch den Filter bei gleichzeitig geringem Druckverlust zwischen einer Eingangs- und einer Ausgangsseite möglich.

In einer Ausgestaltung der Erfindung beträgt ein Verhältnis κ_{d} eines ersten Durchmessers d₂ zu einem zweiten Durchmesser d₁ der Kugeln zwischen 0,10 und 0,35, vorzugsweise zwischen 0,20 und 0,31, besonders bevorzugt 0,3. Das Verhältnis κ_{d} ist definiert als der Quotient aus dem Durchmesser d₂ der zweiten Kugelart zu dem Durchmesser d₁ der ersten Kugelart, wobei d₁ > d₂ ist. Bei gegebenem κ_{d} und festgelegtem ersten Durchmesser d₁ ist der zweite Durchmesser d₂ bestimmbar, indem d₁ mit κ_{d} multipliziert wird.

Es versteht sich, dass κ_{d} stets ungleich 1 ist, da sonst keine bidisperse Kugelpackung vorläge.

Der Erfinder hat erkannt, dass bei einem Verhältnis κ_{d} kleiner als 0,10 ein möglicher Durchfluss durch einen erfindungsgemäßen Filter unter einen Durchflusswert sinkt, bei dem eine beispielsweise drucklose Benutzung des Filters noch möglich ist.

Bei einem Verhältnis κ_{d} größer als 0,35 steigt zwar ein Durchfluss durch den Filter an, jedoch nimmt eine Filterleistung ab, da eine Gesamtkugeloberfläche nicht mehr ausreicht, um aus dem Wasser zu entfernende mikro- oder nanoskalige Kunststoffpartikel aufzunehmen.

Der Erfinder hat herausgefunden, dass für ein Verhältnis κ_{d} =0,3 ein besonders leistungsstarker Filter geschaffen wird, der einen hohen Durchfluss und eine hohe Reinigungsleistung aufweist.

In einer weiteren Ausgestaltung der Erfindung ist ein Durchmesser d₁ der Kugeln größer ist als ein Durchmesser d₂ der Kugeln und beträgt zwischen 0,95 und 1,05 mm, vorzugsweise zwischen 0,98 und 1,02 mm, besonders bevorzugt 1,0 mm. Dieser Durchmesser einer ersten Kugelart der in einer bidispersen Kugelpackung angeordneten Kugeln hat sich als besonders vorteilhaft herausgestellt, um eine hinreichend große spezifische Oberfläche des Filtermediums auszubilden, auf der nahezu sämtliche Kunststoffpartikel aus dem zu reinigenden Wasser adsorbiert werden können.

In einer Ausgestaltung der Erfindung beträgt ein Verhältnis κₚ eines Volumenanteils p₂ der Kugeln an einem gesamten Kugelvolumen in dem Filtermedium zu einem Volumenanteil p₁ der Kugeln an einem gesamten Kugelvolumen in dem Filtermedium 0,4 bis 0,9, vorzugsweise 0,45 bis 0,70, besonders bevorzugt von 0,49 bis 0,61. Das Verhältnis κₚ ist definiert als der Quotient aus dem Volumenanteil p₂ der zweiten Kugelart (mit Durchmesser d₂) zu dem Volumenanteil p₁ der ersten Kugelart (mit Durchmesser d₁), wobei p₁ + p₂ = 1 ist. Der Volumenanteil beschreibt einen Anteil von Kugeln mit Durchmesser d₁ und einen Anteil von Kugeln mit Durchmesser d₂ in Bezug auf das gesamte Kugelvolumen in dem Filtermedium.

Ein Verhältnis κₚ von 0,5 würde beispielsweise bedeuten, dass Kugeln mit einem Durchmesser d₁ einen doppelt so großen Volumenanteil p₁ haben wie wie Kugeln mit einem Durchmesser d_{2,}, deren Volumenanteil p₂ beträgt. Dies bedeutet, dass zwei Drittel des gesamten Kugelvolumens in dem Filtermedium Kugeln mit einem Durchmesser d₁ zuzurechnen sind.

Der Erfinder hat festgestellt, dass in dem genannten Bereich ein besonders wirtschaftlich herzustellender Filter geschaffen wird.

Zweckmäßigerweise weist das Filtermedium in Durchströmungsrichtung des Filters eine Länge zwischen 3 und 12 cm auf, vorzugsweise zwischen 4 und 10 cm, besonders bevorzugt 8 cm oder 9 cm. Es hat sich durch Versuche und Strömungssimulationen gezeigt, dass ein Filtermedium mit einer solchen Länge eines besonders gute Reinigungsleistung aufweist. Weist das Filtermedium eine Länge von 9 cm auf, konnten nahezu sämtliche Kunststoffpartikel mit einer Größe zwischen 1 nm und 10 µm aus dem Wasser entfernt werden, während bei einer Länge von 8 cm nahezu sämtliche der Kunststoffpartikel mit einer Größe zwischen 10 µm und 30 µm aus dem Wasser entfernt werden konnten. Durch eine Länge des Filtermediums kann eine Reinigungsleistung maßgeschneidert werden. Vorteilhaft ist ein erfindungsgemäßer Filter vielseitig verwendbar.

In einer weiteren Ausgestaltung der Erfindung beträgt ein Volumenstrom, mit dem der Filter von Wasser durchströmbar ist, zwischen 4 und 15 I/min, vorzugsweise zwischen 7 und 12 l/ min. Vorteilhaft ist eine Alltagsbenutzung ohne zusätzliche Druckbeaufschlagung möglich. Insbesondere ist eine Benutzung im häuslichen Alltag zur zusätzlichen Trinkwasserreinigung möglich.

In einer weiteren Ausgestaltung der Erfindung enthalten die Kugeln ein Material, dessen Oberfläche aktivierbar ist, vorzugsweise Siliziumdioxid. Außer Siliziumdioxid (SiO₂) ist die Verwendung technischer Keramiken denkbar, insbesondere Zirkoniumdioxid (ZrO₂) oder Aluminiumoxid (Al₂O₃) - Vorzugsweise bestehen die Kugeln jedoch aus SiO₂.

Durch die Aktivierung der Oberfläche werden materialabhängig Silanol- und/oder Hydroxidgruppen gebildet, die eine besonders feste Verbindung mit einem Beschichtungsmaterial eingehen. Vorteilhaft wird sichergestellt, dass sich das Beschichtungsmaterial, insbesondere ein solches aus einem Kunststoff gebildetes, sich nicht ablöst.

Eine Aktivierung der Oberfläche kann beispielsweise durch sogenannte Piranha-Lösung (Peroxomonoschwefelsäure; 3 Teile konzentrierte Schwefelsäure und 1 Teil 30 Gew.-% Wasserstoffperoxidlösung) oder durch Plasma, beispielsweise durch sogenanntes Plasma-Etching, erfolgen.

Zweckmäßigerweise ist die Schicht aus einem hydrophoben oder hydrophilen Material gebildet, insbesondere aus einem hydrophoben oder hydrophilen Material ausgewählt aus der Gruppe bestehend aus Trichlorsilan, Zellulose, Polyamid und Polyethylenglycol, oder die Schicht ist aus einem Material gebildet, das ein elektrisches Dipolmoment aufweist und aus der Gruppe bestehend aus Polytetrahydrofuran, Polymethylmethacrylat und einem Zeolithen ausgewählt ist.

Das Trichlorsilan ist vorzugsweise Octadecyltrichlorsilan. Eine Trichlorsilan, insbesondere Octadecyltrichlorsilan (OTS), aufweisende Schicht ist hydrophob und zur Aufnahme von nano- oder mikroskaligen Kunststoffpartikeln geeignet.

Eine Schicht, die Zellulose, Polyamid und/oder Polyethylenglykol (PEG) aufweist, ist hydrophil. Zur Absorption von Kunststoffpartikeln können Wasserstoffbrücken zwischen der Schicht und den Kunststoffpartikeln ausgebildet werden. Durch eine hydrophile Schicht sind insbesondere Polyurethan (PU), Polycarbonat (PC), Polyamid (PA), Polyvinylchlorid (PVC), Phenolharze und Polymethylmethacrylat (PMMA) und Polypropylen (PP) aus Trinkwasser entfernbar.

Denkbar ist, dass die Schicht aus einen Material gebildet, das ein permanentes elektrisches Dipolmoment aufweist, vorzugsweise Tetrahydrofuran und/oder ein natürlicher Zeolith. Denkbar ist außerdem, dass die Schicht als Kohlenstoffmolekularsieb (carbon molecular sieve) ausgebildet ist. Der Zeolith kann natürlich oder synthetisch sein.

Weist eine Schicht ein Material mit einem permanenten elektrischen Dipolmoment auf, sind insbesondere Polyurethan (PU), Polycarbonat (PC), Polyamid (PA) besonders gut aus Trinkwasser entfernbar.

In einer Ausgestaltung der Erfindung ist die Schicht aus einen Material gebildet ist, das einen permanenten Dipol aufweist und zur Induzierung eines Dipols in einem unpolaren Kunststoffpartikel eingerichtet ist, vorzugsweise Aceton und/oder Polymethylmethacrylat (PMMA). Weist eine Schicht ein Material mit einem permanenten Dipol auf, können insbesondere Polymethylmethacrylat (PMMA), Polyamid (PA) und Polypropylen (PP) besonders gut aus Trinkwasser entfernt werden.

Zweckmäßigerweise ist das Material, das ein konjugiertes II-System aufweist, aus der Gruppe bestehend aus Aktivkohle, Graphen, Organozeolithen und polyzyklischen aromatischen Kohlenwasserstoffen ausgewählt.

Die polyzyklischen aromatischen Kohlenwasserstoffe sind insbesondere ausgewählt aus der Gruppe bestehend aus Naphthalin, Anthracen, Benzopyren, Acenaphthylen, Acenaphthen, Fluoren, Phenanthren, Fluoranthen, Pyren, Benzanthracen, Coronen, Ovalen, Tatracen, Pentacen, Chrysen, Perylen, Benzo[a]fluoranthen, Benzo[j]fluoranthen, Pentaphen, Hexacen, Heptaphen, Heptacen, Trinaphthylen und Superphenalen. Weiter denkbar ist die Verwendung von Mesitylen und Xylol.

Durch eine Schicht, die ein konjugiertes II-System aufweist, können insbesondere Polyethylenterepthalat (PET), Polybutylenterephtalat (PBT), Polyethylennaphthalat (PEN) oder Polystyrol (PS) aus Wasser entfernt werden.

In einer Ausgestaltung der Erfindung weist das Filtermedium mehrere Bereiche auf, die in Durchströmungsrichtung des Filters hintereinander angeordnet sind, wobei ein jeder Bereich zum Entfernen von bestimmten Kunststoffpartikeln aus dem Wasser eingerichtet ist. Vorteilhaft ist ein einziger Filter universell benutzbar, um verschiedene Kunststoffpartikel aus Trinkwasser zu entfernen. Dies ist insbesondere für solche Filter wichtig, die für den Hausgebrauch vorgesehen sind.

Denkbar ist, dass benachbarte Bereiche in Bezug auf die Kugelgrößen, d.h. die bidisperse Kugelpackung, gleich ausgebildet sind, das heißt strömungsmechanisch gleiche Eigenschaften aufweisen und sich Kugeln einzelner Bereiche lediglich durch deren Beschichtung voneinander unterscheiden.

Denkbar ist außerdem, dass die Bereiche voneinander unterschiedliche strömungsmechanische Eigenschaften aufweisen. Beispielsweise kann ein erster Bereich eine bidisperse Kugelpackung mit einer geringeren Packungsdichte umfassen als ein zweiter, benachbarter Bereich.

Auch können sich Durchmesser d_{1,1} und d_{2,1} von Kugeln eines ersten Bereichs von Durchmessern d_{1,2} und d_{2,2} von Kugeln eines benachbarten zweiten Bereichs unterscheiden. Selbiges gilt für ein Verhältnis κₚ von Kugelvolumenanteilen p_{1,1}, p_{1,2} und p_{2,1}, p_{2,2} sowie ein Verhältnis κ_{d} von Kugeldurchmessern d_{1,1}, d_{1,2} und d_{2,1}, d_{2,2}.

Beispielsweise kann ein erster Bereich zum Entfernen von Polyethylenpartikeln (PE) vorgesehen sein und ein zweiter Bereich zum Entfernen von Polymethylmethacrylatpartikeln (PMMA).

Denkbar ist außerdem, dass jeder Bereich zwei verschiedene Arten von Kugeln aufweist, die sich neben ihrer Größe durch das Beschichtungsmaterial unterscheiden. Beispielsweise kann eine erste Art von Kugeln der bidispersen Kugelpackung zum Entfernen einer ersten Art von Kunststoffpartikeln eingerichtet ist, während eine zweite Art von Kugeln der bidispersen Kugelpackung des jeweiligen Bereichs zum Entfernen einer zweiten Art von Kunststoffpartikeln eingerichtet ist.

Vorteilhaft sind ein erfindungsgemäßer Filter sowie eine erfindungsgemäße Wasseraufbereitungsvorrichtung auf spezielle Anwendungsfälle maßschneiderbar.

Zweckmäßigerweise ist das Filtermaterial rotationssymmetrisch, vorzugsweise zylindrisch, ausgebildet und in Achsrichtung durchströmbar. Eine Filtrationsleistung reduzierende Randeffekte werden vorteilhaft minimiert bzw. verhindert.

In einer weiteren Ausgestaltung der Erfindung weisen die Kugeln benachbarter Bereiche voneinander verschiedene Schichten auf. Die Kugeln eines jeden Bereichs weisen eine bidisperse Kugelpackung auf und sind mit einer Schicht belegt, die zur Aufnahme einer bestimmten Art von Kunststoffpartikeln eingerichtet ist. Beispielsweise können Kugeln eines ersten Bereichs eine Schicht aufweisen, die ein Beschichtungsmaterial umfasst, das ein elektrisches Dipolmoment aufweist, während Kugeln eines zweiten Bereichs eine Schicht aufweisen, die ein hydrophobes Material umfasst, und diejenigen Kugeln eines dritten Bereichs weisen eine Schicht auf, die ein hydrophiles Material umfasst.

Vorteilhaft wird ein universell einsetzbarer Filter mit hoher Filtrationsleistung geschaffen. Zweckmäßigerweise weist eine Vorrichtung zur Wasseraufbereitung, insbesondere zum Entfernen von mikro- oder nanoskaligen Kunststoffpartikeln aus Wasser, einen Filter nach einem der Ansprüche 1 bis 12 auf.

In einer Ausgestaltung einer erfindungsgemäßen Wasseraufbereitungsvorrichtung ist diese durch Schweredruck oder durch den Leitungsdruck einer Gebäudewasserleitung betreibbar. Durch Schweredruck betreibbar bedeutet, das von Kunststoffpartikeln zu reinigendes Wasser einer über einem Filter stehenden Wassersäule aufgrund der Schwerkraft durch das Filtermedium hindurchströmen kann.

Der Erfinder hat durch ein Filtermedium, das eine bidisperse Kugelpackung beschichteter Kugeln aufweist, einen Filter geschaffen, durch den nano- oder mikroskalige Kunststoffpartikel trotz ihrer geringen Größe ohne hohen Druck nahezu vollständig aus Trinkwasser entfernt werden können, so dass der Betrieb einer erfindungsgemäßen Wasseraufbereitungsvorrichtung vorteilhaft durch den Leitungsdruck einer Gebäudewasserleitung betreibbar ist. Eine mit einem erfindungsgemäßen Filter versehene Filterpatrone kann beispielsweise an einen Küchenwasserhahn montiert werden und zur Aufbereitung von Leitungswasser benutzt werden.

Die Erfindung wird nachfolgend anhand von Ausführungsbeispielen und der beigefügten, sich auf die Ausführungsbeispiele beziehenden Zeichnungen, näher erläutert. Es zeigen:
- Fig. 1: Eine erfindungsgemäße Wasseraufbereitungsvorrichtung mit mehreren Ausführungsformen eines erfindungsgemäßen Filters,
- Fig. 2: Details eines erfindungsgemäßen Filters.

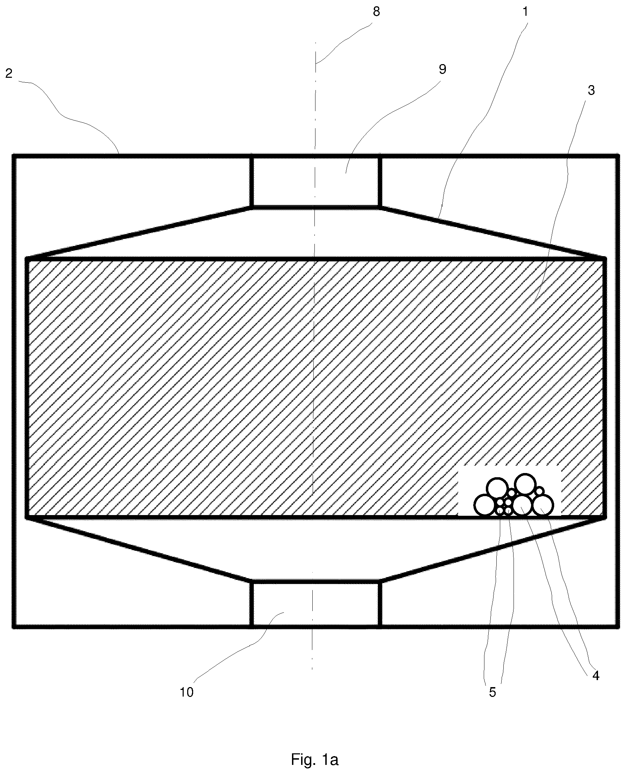

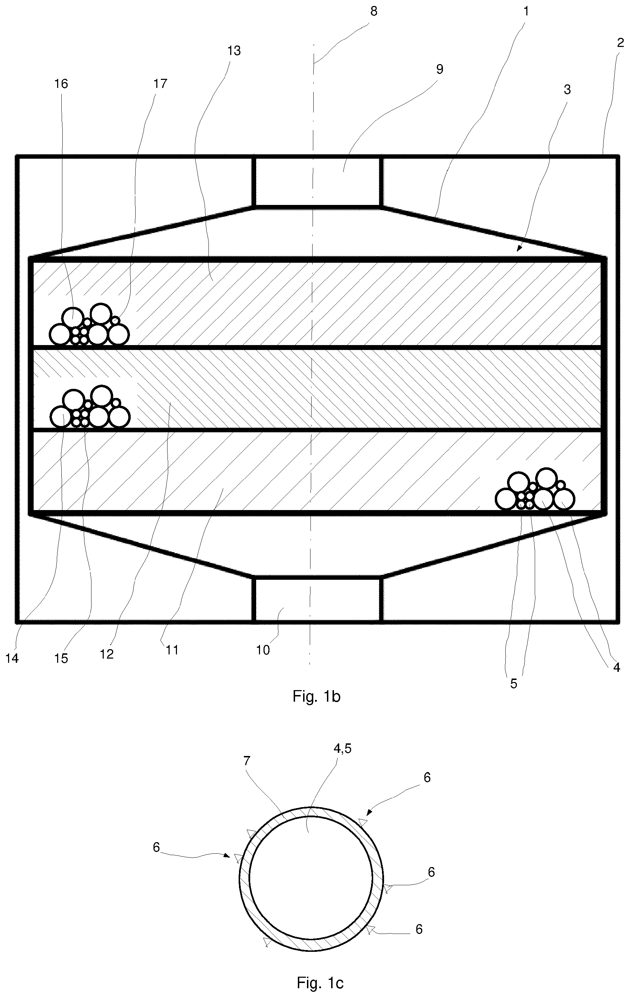

Ein in Fig. 1a im Längsschnitt schematisch gezeigter Filter 1 einer Wasseraufbereitungsvorrichtung 2, die zur Montage an einen in Fig. 1 nicht gezeigten Wasserhahn vorgesehen ist, umfasst ein zylindrisches Filtermedium 3, das aus in Fig. 1c im Details gezeigten SiO₂-Kugeln 4, 5 gebildet ist, die in einer bidispersen Kugelpackung angeordnet sind und mit einer Kunststoffpartikel 6 aufnehmenden Schicht 7 belegt sind. Aus Gründen der Übersichtlichkeit sind in Fig. 1a nur einige Kugeln 4, 5 des Filtermediums 3 gezeigt und nicht alle mit einem Bezugszeichen versehen. Die Kugeln 4 weisen einen Durchmesser d₁ auf, während die Kugeln 5 einen Durchmesser d₂ aufweisen.

Durch einen sich koaxial zur Zylinderachse 8 erstreckenden Einlasskanal 9 kann Wasser in den Filter 1 einströmen und nach Passieren des Filtermediums durch einen koaxial zur Zylinderachse verlaufenden Auslasskanal 10 aus dem Filter 1 herausströmen.

Das Filtermedium 3 ist in Durchströmungsrichtung 9 cm lang.

Ein in Fig. 1b im Längsschnitt schematisch gezeigtes Filter 1 unterscheidet sich von demjenigen in Fig. 1 gezeigten dadurch, dass das Filtermedium 3 drei Bereiche 11, 12, 13 aufweist, die jeweils beschichtete, in einer bidispersen Kugelpackung angeordnete SiO₂-Kugeln 4, 5, 14, 15, 16, 17 aufweisen, wobei die Kugeln 4, 5 eine Schicht aufweisen, die ein anderes Material umfasst als die Schicht der Kugeln 14, 15 und diese wiederum ein anderes Material aufweist als die Schicht, mit der die Kugeln 16, 17 beschichtet sind. Sämtliche Bereiche 11, 12, 13 sind in ein einziges, nicht mit einem Bezugszeichen versehenes Filtergehäuse eingebracht.

Durch einen Filter 1 gemäß Fig. 1b ist ein Entfernen von verschiedenartigen mikro- oder nanoskaligen Kunststoffteilchen vorteilhaft möglich.

In dem Ausführungsbeispiel gemäß Fig. 1b sind die SiO₂-Kugeln 4, 5 des Bereichs 11 mit einer Polyamid umfassenden Schicht belegt, während die SiO₂-Kugeln 14, 15 des Bereichs 12 mit einer Polyethylenglykol (PEG) umfassenden Schicht belegt sind. Die SiO₂-Kugeln 16, 17 des Bereichs 13 sind mit Polymethymethacrylat (PMMA) belegt.

Es wird eine Wasseraufbereitungsvorrichtung 2 mit einem Filter 1 geschaffen, die zum Entfernen von Polyurethan (PU), Polypropylen (PP) sowie Polymethylmethacrylat (PMMA) aus Trinkwasser besonders geeignet ist.

Denkbar ist, dass der Bereich 13 SiO₂-Kugeln aufweist, die mit Aktivkohle beschichtet sind.

Obwohl die Kugeln 4, 14, 16 und die Kugeln 5, 15, 17 in diesem Ausführungsbeispiel gleich groß sind, ist dies nicht erforderlich.

Denkbar ist außerdem, dass die Kugeln 4, 5 in dem Bereich 11 zwei Durchmesser d_{11,1} und d_{11,2} aufweisen, die verschieden sind von Durchmessern d_{12,1} und d_{12,2} von Kugeln 14, 15 des Bereichs 12 und diese wiederum verschieden sind von Durchmessern d_{13,1} und d_{13,2} von Kugeln 16, 17 des Bereichs 13.

Weiter denkbar ist, dass die SiO₂-Kugeln 4, 5 des Bereichs 11 mit voneinander verschiedenen Schichten belegt sind. Selbiges ist für die SiO₂-Kugeln 14, 15 des Bereichs 12 sowie die SiO₂-Kugeln 15, 17 des Bereichs 13 denkbar.

Aus Gründen der Übersichtlichkeit sind nur einige Kugeln 4, 5, 14-17 des Filtermediums 3 in den Bereichen 11-13 gezeigt.

Zur Herstellung eines Filters 1 mit einem Filtermedium 3 gemäß Fig. 1b werden die Bereiche 11-13 nacheinander in ein in Fig. 1 nicht mit einem Bezugszeichen versehenen Gehäuse des Filters 1 mit den entsprechenden bidispersen Kugelmischungen befüllt.

Es versteht sich, dass weitere Bereiche vorgesehen sein können, in denen beispielsweise bekannte Filtermaterialen verwendet werden, insbesondere Aktivkohle, die vorzugsweise kugelförmig ausgebildet ist und in einer bidispersen Kugelpackung vorliegt.

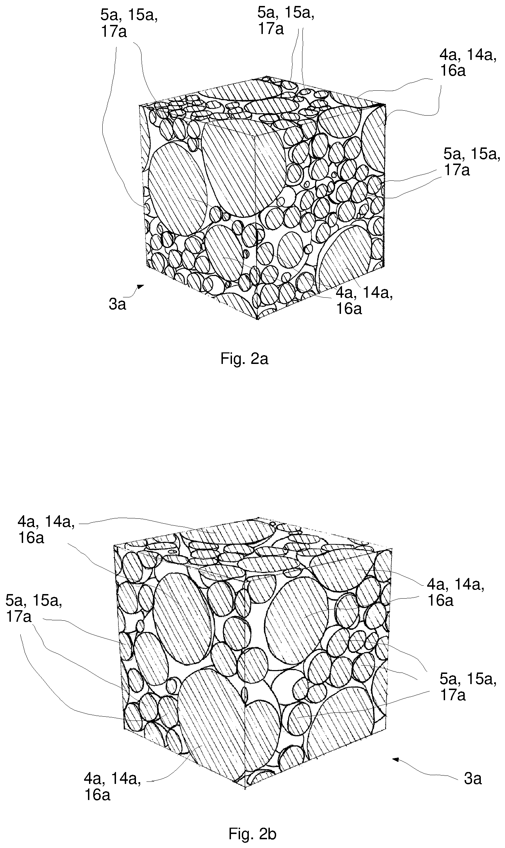

Es wird nun auf Fig. 2 Bezug genommen, wo gleiche oder gleichwirkende Teile mit derselben Bezugszahl wie in Fig. 1 bezeichnet sind und der betreffenden Bezugszahl jeweils der Buchstabe a beigefügt ist.

Tabelle 1 zeigt beispielhaft drei geeignete Filtermedien 3₁, 3₂ und 3₃ mit bidispersen Kugelpackungen sowie deren Strömungseigenschaften in Abhängigkeit von Kugelparametern, wobei Details der Filtermedien 3₂ und 3₃ in Fig. 2a und 2b gezeigt sind.

**Tabelle 1: Eigenschaften von drei geeigneten Filtermedien**

| Filtermedium | d₁ (mm) | d₂ (mm) | p₁ (%) | p₂ (%) | κ_{d} | κₚ | Packungsdichte (Vol- %) | spez. Oberfläche (m²/m³) | Volumenstrom (l/min) |
|---|---|---|---|---|---|---|---|---|---|
| 3₁ | 3,0 | 0,450 | 0,625 | 0,375 | 0,150 | 0,60 | 75 | 4572,6 | 3,63 |
| 3₂ | 3,0 | 0,675 | 0,625 | 0,375 | 0,225 | 0,60 | 74 | 3305,5 | 5,71 |
| 3₃ | 3,0 | 0,900 | 0,667 | 0,333 | 0,300 | 0,50 | 72 | 2548,9 | 8,56 |

Es bedeuten:
d₁: Durchmesser der größeren Kugeln (4, 14, 16 in Fig. 1)
d₂: Durchmesser der kleineren Kugeln (5, 15, 17 in Fig. 1)
p₁: Volumenanteil der größeren Kugeln am Gesamtkugelvolumen
p₂: Volumenanteil der kleineren Kugeln am Gesamtkugelvolumen
κ_{d}: Verhältnis d₂ zu d₁
κₚ: Verhältnis p₂ zu p₁
Packungsdichte: Volumenanteil der Kugeln am Gesamtvolumen des Filtermediums
spez. Oberfläche: gesamte Oberfläche der Kugeln 4, 5, 14-17 in dem Filtermedium Volumenstrom: Volumenstrom durch das Filtermedium bei einer Wasseraufbereitung.

Ein in Fig. 2a in perspektivisch Ansicht gezeigter Ausschnitt eines Filtermediums 3a ist gemäß Konfiguration 2, das heißt Filtermedium 3₂, aus Tabelle 1 ausgebildet.

Ein in Fig. 2b in perspektivischen Ansicht gezeigter Ausschnitt eines Filtermediums 3a ist gemäß Konfiguration 3, das heißt Filtermedium 3₃, aus Tabelle 1 ausgebildet.

Schraffierte Flächen in Fig. 2a und Fig. 2b sind Schnittflächen durch einzelne Kugeln des gezeigten Ausschnitts, die teilweise nicht durch einen Kugelmittelpunkt der jeweiligen Kugel verlaufen. Dadurch entsteht ein verfälschender optischer Eindruck, wonach eine andere als eine bidisperse Kugelpackung vorliegt.

Tabelle 2 zeigt beispielhaft drei besonders geeignete Filtermedien 3_{1'}, 3_{2'} und 3_{3'} mit bidispersen Kugelpackungen.

**Tabelle 2: Eigenschaften von drei besonders geeigneten Filtermedien**

| Konfiguration | d₁ (mm) | d₂ (mm) | p₁ (%) | p₂ (%) | κ_{d} | κₚ | Packungsdichte (Vol-%) |
|---|---|---|---|---|---|---|---|
| 3_{1'} | 1,0 | 0,300 | 0,667 | 0,333 | 0,300 | 0,50 | 72 |
| 3_{2'} | 1,0 | 0,25 | 0,625 | 0,375 | 0,250 | 0,60 | 73 |
| 3_{3'} | 1,0 | 0,225 | 0,625 | 0,375 | 0,225 | 0,60 | 74 |

Bei der Konfiguration 3_{1'} wurde beispielsweise bei einer Länge des Filtermediums, d.h. dessen Größe in Durchströmungsrichtung, von 8,0 cm eine Filtereffizienz von > 99,0 % erreicht, d.h. mehr als 99,0 % von Kunststoffpartikeln (hier: Polyethylen) mit einer Größe zwischen 250 nm und 10 µm wurden aus dem Wasser, das durch ein Filter mit diesem Filtermedium hindurchströmt, entfernt. Dabei wurde eine Strömungsgeschwindigkeit von 0,02 m/s bei einem Volumenstrom von 6,5 l/min erreicht.

Das Filtermedium ist zylindrisch ausgebildet, wobei dessen Durchmesser 9 cm beträgt.

Nachfolgend werden beispielhaft verschiedene Möglichkeiten zur Beschichtung von SiO₂-Kugeln beschrieben:

### Beispiel 1:

Zur Herstellung eines Filtermediums aus Kugeln, die in einer bidispersen Kugelpackung angeordnet sind, werden SiO₂-Kugeln mit einem Durchmesser von 1,00 mm und 0,30 mm 60 Minuten in sogenannte Piranha-Lösung (3 Teile konzentrierte Schwefelsäure und 1 Teil 30 Gew.-% Wasserstoffperoxidlösung) gegeben und danach mit destilliertem Wasser, gefolgt von Aceton und Ethanol abgespült. Eine Trocknung erfolgt während 60 Minuten bei 130 °C. Zur Beschichtung der Kugeln mit einer Polyethylenglykol (PEG) aufweisenden Schicht werden die getrockneten Kugeln in eine Lösung gegeben, für deren Herstellung 3,54 g Polyethylenglykol in 1,0 I Toluol mit 0,9 g Triethylamin (TEA), das als Katalysator wirkt, vermischt wurden, und während 5 Minuten durch Ultraschall behandelt. Nach Entnahme aus dem Ultraschallbad werden die Kugeln mit destilliertem Wasser abgespült und während 60 Minuten bei 130°C getrocknet.

Eine solche Beschichtung ist hydrophil und beispielsweise zum Entfernen von Polycarbonat (PC)- oder Polyamid (PA)-Teilchen aus Wasser geeignet.

### Beispiel 2:

Zur Herstellung eines Filtermediums aus Kugeln, die in einer bidispersen Kugelpackung angeordnet sind, werden SiO₂-Kugeln mit einem Durchmesser von 1,0 mm und 0,225 mm zur Reinigung mit Ethanol, Dichlormethan sowie deionisiertem Wasser gespült.

Danach wird Polytetrahydrofuran (THF) mit Dichlormethan im Verhältnis 1:1 gemischt und mit einem sogenannten Vortexer vermischt. Danach wird diese Mischung mit 7 Vol.-% (bezogen auf das Volumen der Mischung) Trifluoressigsäue versetzt und die gereinigten Kugeln zur Beschichtung für 10 min. darin eingelegt. Nach einer Reinigung mit Ethanol werden die beschichteten Kugeln während 30 min. bei 130°C getrocknet.

Eine solche Beschichtung weist ein elektrisches Dipolmoment auf und ist beispielsweise zum Entfernen von Polycarbonat (PC) sowie Polyamid (PA) geeignet.

## Patentansprüche

1. Filter (1) zum Entfernen von mikro- oder nanoskaligen Kunststoffpartikeln (6) aus Wasser, der ein von dem Wasser durchströmbares Filtermedium (3; 3a) aufweist, wobei das Filtermedium (3; 3a) Kugeln (4, 5, 14-17; 4a, 5a, 14a-17a) umfasst, wobei die Kugeln (4, 5, 14-17; 4a, 5a, 14a-17a) eine Schicht (7) aufweisen, die zur Aufnahme der Kunststoffpartikel (6) eingerichtet ist, und wobei die Kugeln (4, 5, 14-17; 4a, 5a, 14a-17a) in einer bidispersen Kugelpackung angeordnet sind,
**dadurch gekennzeichnet,**
**dass** die Schicht (7) aus einem hydrophoben oder hydrophilen Material ausgewählt aus der Gruppe bestehend aus Zellulose, Polyamid und Polyethylenglycol gebildet ist, oder dass die Schicht aus einem Material gebildet ist, das ein elektrisches Dipolmoment aufweist und aus der Gruppe bestehend aus Polytetrahydrofuran, Polymethylmethacrylat und einem Zeolithen ausgewählt ist, und/oder dass die Schicht (7) ein Material umfasst, das ein konjugiertes π-System aufweist.

2. Filter nach Anspruch 1,
**dadurch gekennzeichnet,**
**dass** die Packungsdichte der Kugeln (4, 5, 14-17; 4a, 5a, 14a-17a) zwischen 55 und 90 Vol-% beträgt, vorzugsweise zwischen 65 und 80 Vol-%, besonders bevorzugt zwischen 71 Vol-% und 76 Vol-%.

3. Filter nach Anspruch 1 oder 2,
**dadurch gekennzeichnet,**
**dass** ein Verhältnis κ_{d} eines ersten Durchmessers d₂ der Kugeln (5, 15, 17; 5a, 15a, 17a) zu einem zweiten Durchmesser d₁ der Kugeln (4, 14, 16; 4a, 14a, 16a) zwischen 0,10 und 0,35 beträgt, vorzugsweise zwischen 0,20 und 0,31, besonders bevorzugt 0,3.

4. Filter nach einem der Ansprüche 1 bis 3,
**dadurch gekennzeichnet,**
**dass** ein Durchmesser d₁ der Kugeln (4, 14, 16; 4a, 14a, 16a) größer ist als ein Durchmesser d₂ (5, 15, 17; 5a, 15a, 17a) der Kugeln und zwischen 0,95 und 1,05 mm beträgt, vorzugsweise zwischen 0,98 und 1,02 mm, besonders bevorzugt 1,0 mm.

5. Filter nach einem der Ansprüche 1 bis 4,
**dadurch gekennzeichnet,**
**dass** ein Verhältnis κₚ eines Volumenanteils p₂ der Kugeln (5, 15, 17; 5a, 15a, 17a) an einem gesamten Kugelvolumen in dem Filtermedium (3; 3a) zu einem Volumenanteil p₁ der Kugeln (4, 14, 16; 4a, 14a, 16a) an einem gesamten Kugelvolumen in dem Filtermedium (3; 3a) 0,4 bis 0,9 beträgt, vorzugsweise 0,45 bis 0,70, besonders bevorzugt von 0,49 bis 0,61.

6. Filter nach einem der Ansprüche 1 bis 5,
**dadurch gekennzeichnet,**
**dass** das Filtermedium (3; 3a) in Durchströmungsrichtung des Filters (1) eine Länge zwischen 3 und 12 cm aufweist, vorzugsweise zwischen 4 und 10 cm, besonders bevorzugt 8 cm oder 9 cm.

7. Filter nach einem der Ansprüche 1 bis 6,
**dadurch gekennzeichnet,**
**dass** ein Volumenstrom, mit dem der Filter (1) von Wasser durchströmbar ist, zwischen 4 und 15 I/min beträgt, vorzugsweise zwischen 7 und 12 I/min.

8. Filter nach einem der Ansprüche 1 bis 7,
**dadurch gekennzeichnet,**
**dass** die Kugeln (4, 5, 14-17; 4a, 5a, 14a-17a) ein Material enthalten, dessen Oberfläche aktivierbar ist, vorzugsweise Siliziumdioxid.

9. Filter nach Anspruch 1,
**dadurch gekennzeichnet,**
**dass** das Material, das ein konjugiertes II-System aufweist, aus der Gruppe bestehend aus Aktivkohle, Graphen, Organozeolithen und polyzyklischen aromatischen Kohlenwasserstoffen ausgewählt ist.

10. Filter nach einem der Ansprüche 1 bis 9,
dass das Filtermedium (3; 3a) mehrere Bereiche (11-13) aufweist, die in Durchströmungsrichtung des Filters (1) hintereinander angeordnet sind, wobei ein jeder Bereich (11-13) zum Entfernen von bestimmten Kunststoffpartikeln (6) aus dem Wasser eingerichtet ist.

11. Filter nach Anspruch 10,
**dadurch gekennzeichnet,**
**dass** die Kugeln (4, 5, 14-17; 4a, 5a, 14a-17a) benachbarter Bereiche (11-13) voneinander verschiedene Schichten (7) aufweisen.

12. Vorrichtung (2) zur Wasseraufbereitung, insbesondere zum Entfernen von mikro- oder nanoskaligen Kunststoffpartikeln (6) aus Wasser, die einen Filter (1) nach einem der Ansprüche 1 bis 11 aufweist.

13. Wasseraufbereitungsvorrichtung nach Anspruch 12,
**dadurch gekennzeichnet,**
**dass** die Vorrichtung (2) durch Schweredruck oder durch den Leitungsdruck einer Gebäudewasserleitung betreibbar ist.

## Claims

1. Filter (1) for removing microscale or nanoscale plastic particles (6) from water, comprising a filter medium (3; 3a) through which the water can flow, wherein the filter medium (3; 3a) comprises spheres (4, 5, 14-17; 4a, 5a, 14a-17a), wherein the spheres (4, 5, 14-17; 4a, 5a, 14a-17a) have a coating (7) which is designed for absorbing the plastic particles (6), and wherein the spheres (4, 5, 14-17; 4a, 5a, 14a-17a) are arranged in a bidisperse sphere packing,
**characterized in that**
the coating (7) is formed from a hydrophobic or hydrophilic material selected from the group consisting of cellulose, polyamide and polyethylene glycol, or that the coating is formed from a material which has an electric dipole moment and is selected from the group consisting of polytetrahydrofuran, polymethyl methacrylate and a zeolite, and/or that the coating (7) comprises a material which has a conjugated π-system.

2. Filter according to claim 1,
**characterized in that**
the packing density of the spheres (4, 5, 14-17; 4a, 5a, 14a-17a) is between 55 and 90 vol%, preferably between 65 and 80 vol%, particularly preferably between 71 vol% and 76 vol%.

3. Filter according to claim 1 or 2,
**characterized in that**
a ratio κ_{d} of a first diameter d₂ of the spheres (5, 15, 17; 5a, 15a, 17a) to a second diameter d₁ of the spheres (4, 14, 16; 4a, 14a, 16a) is between 0,10 and 0,35, preferably between 0,20 and 0,31, particularly preferably 0,3.

4. Filter according to one of claims 1 to 3,
**characterized in that**
a diameter d₁ of the spheres (4, 14, 16; 4a, 14a, 16a) is greater than a diameter d₂ (5, 15, 17; 5a, 15a, 17a) of the spheres and is between 0,95 and 1,05 mm, preferably between 0,98 and 1,02 mm, particularly preferably 1,0 mm.

5. Filter according to one of claims 1 to 4,
**characterized in that**
a ratio κₚ of a volume fraction p₂ of the spheres (5, 15, 17; 5a, 15a, 17a) of a total sphere volume in the filter medium (3; 3a) to a volume fraction p₁ of the spheres (4, 14, 16; 4a, 14a, 16a) of a total sphere volume in the filter medium (3; 3a) is 0,4 to 0,9, preferably 0,45 to 0,70, particularly preferably from 0,49 to 0,61.

6. Filter according to one of claims 1 to 5,
**characterized in that**
the filter medium (3; 3a) has a length between 3 and 12 cm in the flow direction of the filter (1), preferably between 4 and 10 cm, particularly preferably 8 cm or 9 cm.

7. Filter according to one of claims 1 to 6,
**characterized in that**
a volume flow with which water can flow through the filter (1) is between 4 and 15 I/min, preferably between 7 and 12 I/min.

8. Filter according to one of claims 1 to 7,
**characterized in that**
the spheres (4, 5, 14-17; 4a, 5a, 14a-17a) contain a material whose surface is activatable, preferably silicon dioxide.

9. Filter according to claim 1,
**characterized in that**
the material which has a conjugated π-system is selected from the group consisting of activated carbon, graphene, organozeolites and polycyclic aromatic hydrocarbons.

10. Filter according to one of claims 1 to 9,
**characterized in that**
the filter medium (3; 3a) has several regions (11-13) which are arranged one behind the other in the flow direction of the filter (1), wherein each region (11-13) is designed for removing specific plastic particles (6) from the water.

11. Filter according to claim 10,
**characterized in that**
the spheres (4, 5, 14-17; 4a, 5a, 14a-17a) of adjacent regions (11-13) have different coatings (7) from one another.

12. Device (2) for water treatment, in particular for removing microscale or nanoscale plastic particles (6) from water, comprising a filter (1) according to one of claims 1 to 11.

13. Water treatment device according to claim 12,
**characterized in that**
the device (2) is operable by gravity or by the line pressure of a building water line.

## Revendications

1. Filtre (1) d'élimination de particules de matière plastique (6) à l'échelle micrométrique ou nanométrique à partir d'eau, comprenant un milieu filtrant (3 ; 3a) à travers lequel l'eau peut s'écouler, le milieu filtrant (3 ; 3a) comprenant des sphères (4, 5, 14-17 ; 4a, 5a, 14a-17a), les sphères (4, 5, 14-17 ; 4a, 5a, 14a-17a) ayant un enrobage (7) qui est conçu pour absorber les particules de matière plastique (6), et les sphères (4, 5, 14-17 ; 4a, 5a, 14a-17a) étant agencées dans un empilement compact de sphères bidispersées,
**caractérisé en ce que**
l'enrobage (7) est formé d'un matériau hydrophobe ou hydrophile choisi dans le groupe constitué de cellulose, polyamide et polyéthylène glycol, ou **en ce que** l'enrobage est formé d'un matériau qui présente un moment dipolaire électrique et est choisi dans le groupe constitué de polytétrahydrofurane, polyméthacrylate de méthyle et une zéolite, et/ou **en ce que** l'enrobage (7) comprend un matériau qui présente un système π conjugué.

2. Filtre selon la revendication 1,
**caractérisé en ce que**
la densité d'empilement compact des sphères (4, 5, 14-17 ; 4a, 5a, 14a-17a) est comprise entre 55 et 90 % en volume, de préférence entre 65 et 80 % en volume, de manière particulièrement préférée entre 71 % en volume et 76 % en volume.

3. Filtre selon la revendication 1 ou 2,
**caractérisé en ce qu'**
un rapport κ_{d} d'un premier diamètre d₂ des sphères (5, 15, 17 ; 5a, 15a, 17a) à un second diamètre d₁ des sphères (4, 14, 16 ; 4a, 14a, 16a) est compris entre 0,10 et 0,35, de préférence entre 0,20 et 0,31, de manière particulièrement préférée 0,3.

4. Filtre selon l'une des revendications 1 à 3,
**caractérisé en ce qu'**
un diamètre d₁ des sphères (4, 14, 16 ; 4a, 14a, 16a) est supérieur à un diamètre d₂ (5, 15, 17 ; 5a, 15a, 17a) des sphères et est compris entre 0,95 et 1,05 mm, de préférence entre 0,98 et 1,02 mm, de manière particulièrement préférée 1,0 mm.

5. Filtre selon l'une des revendications 1 à 4,
**caractérisé en ce qu'**
un rapport κₚ d'une fraction volumique p₂ des sphères (5, 15, 17 ; 5a, 15a, 17a) d'un volume total de sphères dans le milieu filtrant (3 ; 3a) à une fraction volumique p₁ des sphères (4, 14, 16 ; 4a, 14a, 16a) d'un volume total de sphères dans le milieu filtrant (3 ; 3a) est de 0,4 à 0,9, de préférence de 0,45 à 0,70, de manière particulièrement préférée de 0,49 à 0,61.

6. Filtre selon l'une des revendications 1 à 5,
**caractérisé en ce que**
le milieu filtrant (3 ; 3a) présente une longueur comprise entre 3 et 12 cm dans la direction d'écoulement du filtre (1), de préférence entre 4 et 10 cm, de manière particulièrement préférée 8 cm ou 9 cm.

7. Filtre selon l'une des revendications 1 à 6,
**caractérisé en ce qu'**
un débit volumique avec lequel l'eau peut s'écouler à travers le filtre (1) est compris entre 4 et 15 I/min, de préférence entre 7 et 12 I/min.

8. Filtre selon l'une des revendications 1 à 7,
**caractérisé en ce que**
les sphères (4, 5, 14-17 ; 4a, 5a, 14a-17a) contiennent un matériau dont la surface est activable, de préférence dioxyde de silicium.

9. Filtre selon la revendication 1,
**caractérisé en ce que**
le matériau qui présente un système π conjugué est choisi dans le groupe constitué de charbon actif, graphène, organozéolites et hydrocarbures aromatiques polycycliques.

10. Filtre selon l'une des revendications 1 à 9,
**caractérisé en ce que**
le milieu filtrant (3 ; 3a) présente plusieurs régions (11-13) qui sont agencées les unes derrière les autres dans la direction d'écoulement du filtre (1), chaque région (11-13) étant conçue pour éliminer des particules de matière plastique (6) spécifiques de l'eau.

11. Filtre selon la revendication 10,
**caractérisé en ce que**
les sphères (4, 5, 14-17 ; 4a, 5a, 14a-17a) de régions adjacentes (11-13) présentent des enrobages (7) différents les uns des autres.

12. Dispositif (2) de traitement de l'eau, en particulier pour éliminer des particules de matière plastique (6) à l'échelle micrométrique ou nanométrique de l'eau, comprenant un filtre (1) selon l'une des revendications 1 à 11.

13. Dispositif de traitement de l'eau selon la revendication 12,
**caractérisé en ce que**
le dispositif (2) peut être actionné par pression de gravité ou par la pression de conduite d'une conduite d'eau de bâtiment.
